(19) Europäisches Patentamt
European Patent Office
Office européen des brevets

(11) EP 1 993 219 B1

(12) **EUROPÄISCHE PATENTSCHRIFT**

(45) Veröffentlichungstag und Bekanntmachung des Hinweises auf die Patenterteilung:
**18.02.2015 Patentblatt 2015/08**

(51) Int Cl.:
*H04B 7/08* *(2006.01)*     *H01Q 3/26* *(2006.01)*

(21) Anmeldenummer: **08006845.5**

(22) Anmeldetag: **04.04.2008**

(54) **Verfahren zur Berechnung verbesserter Steering-Vektoren**

Method for calculating improved steering vectors

Procédé de calcul de vecteurs d'orientation améliorés

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **16.05.2007  DE 102007023099**

(43) Veröffentlichungstag der Anmeldung:
**19.11.2008  Patentblatt 2008/47**

(73) Patentinhaber: **Airbus Defence and Space GmbH 85521 Ottobrunn (DE)**

(72) Erfinder: **Schopp, Manfred 89269 Vöhringen (DE)**

(74) Vertreter: **Riegel, Werner Airbus Defence and Space GmbH Patentabteilung 88039 Friedrichshafen (DE)**

(56) Entgegenhaltungen:
**EP-A2- 1 584 943     DE-A1- 3 523 537 DE-A1- 19 803 188**

**Beschreibung**

Die Erfindung betrifft ein Verfahren zur Berechnung verbesserten Steering-Vektoren gemäß dem Oberbegriff des Patentanspruchs 1.

Die Filterung dient der Verstärkung eines ausgewählten Signals aus einer bestimmten Einfallsrichtung und / oder der Abschwächung der übrigen Signale eines Signalgemischs aus anderen Einfallsrichtungen.

Beispielhaft für ein Verfahren zur raumselektiven Filterung, das zur Ermittlung der Filterkoeffizienten Sensorcharakteristiken von zumindest einer der einfallenden Signale benötigt, ist als "Signal-Copy" [1] bekannt.

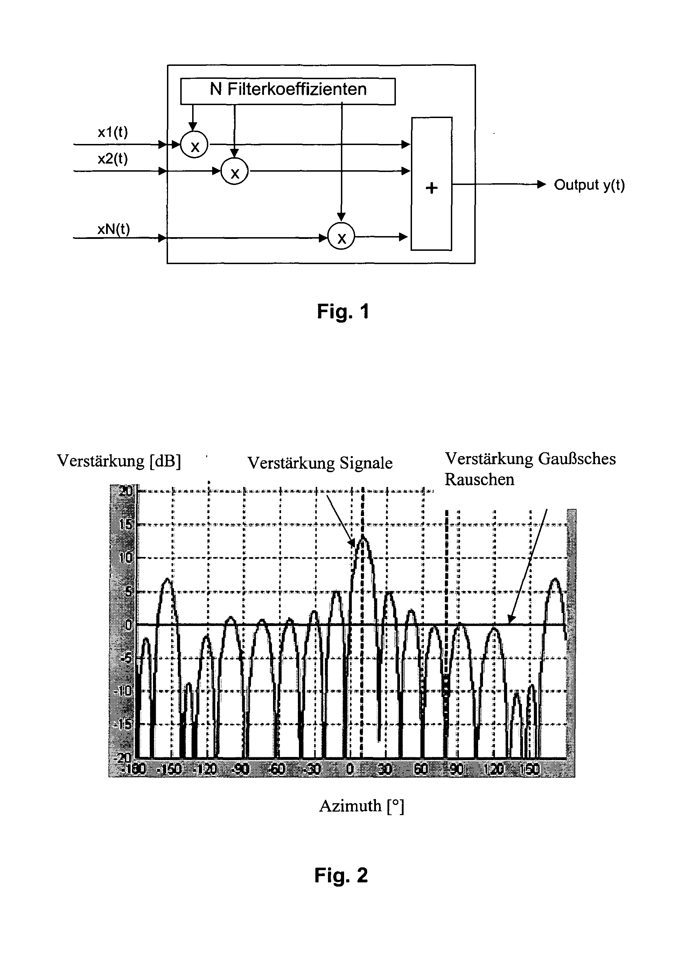

Bei einer raumselektiven FIR-Filterung (Finite Impulse Response-Filterung) wie z.B. mit Signal-Copy werden die von den N Empfangskanälen eines Empfängers gemessenen Sensorsignale mit komplexen Filterkoeffizienten multipliziert (d.h. mit bestimmten Amplituden- und Phasenverschiebungen belegt), so dass im aufsummierten Signal gegenüber dem Empfangssignal eines Einzelelements eine Verstärkung in Richtung eines Nutzsignals und eine Abschwächung in Richtung störender Signale erzielt wird (Fig. 1, Fig. 2).

Fig. 1 zeigt eine raumselektive Filterung mit FIR-Filter: Die Eingangssignale werden über die Filterkoeffizienten linear kombiniert. Fig. 2 zeigt ein Beispiel der Filterwirkung eines raumselektiven FIR-Filters. Ein (Nutz-) Signal aus 10° Azimut wird verstärkt, ein (Stör-) Signal aus 80° Azimut abgeschwächt. Die Hauptkeule des mit Signal-Copy berechneten Filters ist relativ breit, während die Minima für die abzuschwächenden Richtungen schmal und scharf sind. Im ungestörten (rauschfreien) Fall und bei exakt bekannten Einfallsrichtungen und Sensorcharakteristiken handelt es sich bei den Minima um Nullstellen, d.h. die Störsignale werden vollständig ausgeblendet.

Im folgenden wird kurz auf die aus [3],[5] bekannte Modellierung des Welleneinfalls eingegangen.

Bezeichnet man mit s(t) den Vektor der Signale der M einfallenden ebenen Wellen zur Zeit t an einem Referenzpunkt des Arrays der N Sensoren, mit x(t) den Vektor der zum Zeitpunkt t gemessenen komplexen Sensorspannungen, mit A die Steering-Matrix und mit n(t) den Rauschterm, so gilt:

$$x(t) = A \cdot \mathbf{s}(t) + n(t) \qquad (1)$$

mit $A(\theta) = [\mathbf{a}(\theta_l), ..., \mathbf{a}(\theta_M)]$,  N*M Matrix der Sensorcharakteristiken der M Signaleinfallsrichtungen $\theta$
und $\mathbf{a}(\theta_i)$  N-Vektor der Sensorcharakteristiken für die i-te Signaleinfallsrichtung, im folgenden auch mit "Steering-Vektor" bezeichnet.

Weiter sei

$R = E(x(t) \cdot x^*(t))$  die Sensor-Kovarianzmatrix (* (Stern): hermitesch)
$S = E(s(t) \cdot s^*(t))$  die Signal- Kovarianzmatrix

Nimmt man zur Vereinfachung an, dass das Rauschen zeitunabhängig, unkorreliert mit den Sensoren und mit gleicher Leistung $\sigma^2$ für alle Sensoren ist, dann sei $Q = E(n(t) \cdot n^*(t)) = \sigma^2 I$ die Rausch-Kovarianzmatrix, wobei I die Einheitsmatrix ist.

Unter diesen Voraussetzungen folgt, dass R

$$R = ASA^* + \sigma^2 I \qquad (2)$$

eine lineare Struktur und positiv reelle Eigenwerte besitzt.

Aus der linearen Struktur von (2) geht hervor, dass jene N-M Eigenwerte, die orthogonal zu den Spalten von A sind, alle gleich der Rauschleistung $\sigma^2$ sind. Falls nur eine ebene Welle einfällt mit Leistung $\sigma_1^2$ ist der zugehörige Eigenwert $Ew(1) = \sigma_1^2$. [0013]

Der Maximum-Likelyhood Schätzwert für den Vektor s(t) ergibt sich aus Gleichung (1) durch:

$$\hat{s}_{ML}(t) = \left( \hat{A}^H \hat{A} \right)^{-1} \hat{A}^H x(t) \qquad (3)$$

Das Produkt der 3 Matrizen bezeichnet man auch als Pseudoinverse der Matrix $\hat{A}$.

Bei einem Gemisch aus M Signalen erhält man dann aus der m-ten Zeile der Pseudoinversen den Vektor mit den komplexen Filterkoeffizienten zur Verstärkung des m-ten Signals und Unterdrückung der übrigen Signale. Bei paralleler Verarbeitung mit M Messempfängern können so gleichzeitig M Signale verarbeitet werden. Ein Spezialfall des Signal-Copy Verfahrens liegt vor, wenn lediglich ein ausgewähltes Signal verstärkt werden soll und keine weiteren Signale abzuschwächen sind. Man spricht dann auch von einer "Richtkeule".

Zur Ermittlung des Filters nach Gleichung (3) ist nur die Kenntnis der Steering-Vektoren für die Einfallsrichtungen der Signale erforderlich.

Nach Stand der Technik werden für die Sensorcharakteristiken und damit für die Steering-Vektoren der Signaleinfallsrichtungen Annahmen getroffen wie z.B.:

- idealisierte Charakteristiken nach Formeln (isotroper Strahler, kurzer Dipol, kleiner Rahmen, etc.)
- mit geeigneten Rechenprogrammen berechnete Charakteristiken
- im Testfeld vermessene Charakteristiken

Diese angenommenen Steering-Vektoren weichen von den tatsächlichen ab, z.B. als Folge eines nicht vermessenen Plattformeinflusses auf die Sensoren, zeitlicher Variation, nicht exakt bestimmter Sensorpositionen, unterschiedlicher Kabellängen und - dämpfungen, nicht exakt bestimmter Peilwerte etc. Dadurch reduziert sich die Verstärkung des Nutzsignals und als Folge der scharfen Minima insbesondere die Abschwächung der Störsignale.

Eine schrittweise Verbesserung der Filterwirkung lässt sich mit adaptiven Verfahren erzielen. (Siehe z.B. [2]). In einem Closed-Loop Verfahren werden die Filterkoeffizienten mit Hilfe eines eingespeisten Fehler-Signals fortlaufend angepasst. Der Fehler am Ausgang der Filterung wird in den Anpassalgorithmus zurückgeführt. Derartige Verfahren sind jedoch komplex und aufwändig. Hinzu treten Konvergenzprobleme [3]. Auch für die Anwendung adaptiver Verfahren, wie z.B. dem MVDR- Beamformer (Minimum Variance Distortionless Response) [2] ist in der Regel die Kenntnis des Steering-Vektors zumindest eines Signals erforderlich. Die Kenntnis der übrigen Steering-Vektoren verbessert das Konvergenzverhalten und die Konvergenzgeschwindigkeit.

In DE 198 03 188 A1 wird ein Verfahren innerhalb eines Funkkommunikationssystems beschrieben. Aus einer Kovarianzmatrix der Nutzverbindung und einer Kovarianzmatrix der Interferenzen wird ein raumselektives Filter berechnet, bei dem das Verhältnis der Leistungen der Nutzverbindung zu jener der Interferenzen maximiert ist. Durch a priori Wissen über die Anzahl der Teilnehmer, Trainingssequenzen und Teilnehmercode können Kanalimpulsantworten bestimmt werden, aus denen dann die Kovarianzmatrizen gebildet werden.

Aufgabe der Erfindung ist es, ein Verfahren anzugeben, um aus Messwerten einer Peilanlage genauere Steering-Vektoren zu ermitteln und damit bei der raumselektiven Signalfilterung verbesserte Nutzsignalverstärkung und / oder Störsignalunterdrückung zu erzielen.

Diese Aufgabe wird durch das Verfahren gemäß den Merkmalen des Anspruchs 1 gelöst. Vorteilhafte Ausführungen der Erfindung sind Gegenstand von Unteransprüchen. $k \in \{1...M\}$ dessen N Empfangskanäle mit einem N-kanaligen Breitbandempfänger verbunden sind, bei Einfall von M Signalen $S_1...S_M$ bestimmt. Die Empfangssignale werden dabei in B vorgebbare Zeit-oder Frequenzabschnitte zerlegt. Anschließend erfolgt eine Zuordnung von abgespeicherten Messdaten, welche geeignet sind zur Berechnung von Steering-Vektoren, zu den in die B Zeit- oder Frequenzabschnitte zerlegten Empfangssignalen, wobei für jeden der B Zeit- oder Frequenzabschnitte Kovarianzmatrizen C aus einer zeitlichen Abfolge von T Mess-Frames der jeweils N Mess-Signale des Breitbandempfängers gebildet werden sowie Zuordnung eines Klassifikationsmerkmals zu den in die B Zeit- oder Frequenzabschnitte zerlegten Empfangssignalen $S_1...S_M$. Zur Berechnung eines verbesserten Steering-Vektors für ein Signal $S_k$ werden in einem ersten Schritt ein Frequenzintervall FI ausgewählt wird, in welchem das Signal $S_k$ das stärkste Signal ist und wobei die Zuordnung zu $S_k$ anhand vorgebbarer Klassifikationsmerkmale oder der Korrelation von mittels gespeicherten Messdaten ermittelter Steering-Vektoren erfolgt, und in einem zweiten Schritt aus dem einem Signal $S_k$ zugeordneten Frequenzintervall FI derjenige Zeit- oder Frequenzabschnitt $B_{SK}$ ausgewählt wird, welcher die geringste Abweichung zu einem 1-Wellenfall aufweist, wobei der Steering-Vektor für das Signal $S_k$ gleich einer Spalte der Kovarianzmatrix C des Zeit- oder Frequenzabschnitt $B_{SK}$ gesetzt wird oder alternativ gleich dem Eigenvektor zum größten Eigenwert der Kovarianzmatrix..

Die Erfindung sowie beispielhafte Ausführungen der Erfindung werden anhand von Figuren näher erläutert.

Es zeigen:

Fig. 1 eine Prinzipdarstellung eines FIR-Filters,

Fig. 2 ein beispielhaftes Ausgangssignal eines raumselektiven FIR-Filters nach dem Stand der Technik,

Fig. 3 eine schematische Darstellung eines Ablaufplans zur Bestimmung der Einfallsrichtung von Signalen auf ein Sensorarray,

Fig. 4 eine detaillierte Darstellung des Ablaufplans der erfindungsgemäßen Ermittlung von Steering-Vektoren,

Fig. 5 ein Vergleich zwischen der Signalunterdrückung mittels dem bekannten Signal-Copy Verfahren und dem erfindungsgemäßen Verfahren.

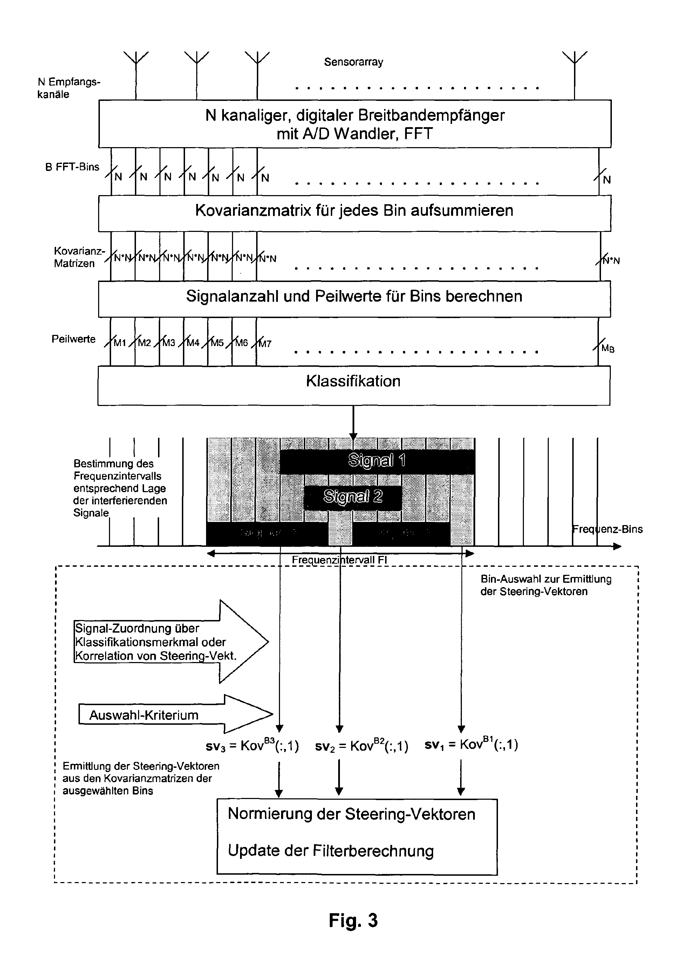

Fig.3 zeigt eine schematische Darstellung eines Ablaufplans zur Bestimmung der Einfallsrichtung von Signalen auf ein Sensorarray, wobei den erfindungsgemäßen Verfahrensschritten zur Bestimmung der Steering-Vektoren beispielhaft ein Breitbandpeiler mit Klassifikator vorgeschaltet ist.

In dem N-kanaligen Breitbandempfänger werden die von einem angeschlossenen Sensorarray empfangenen elektromagnetische Signale Analog/Digital gewandelt und mittels einer Fast Fourier Transformation (FFT) auf B Bins spektral verteilt. Jedes FFT-Bin liefert für einen FFT-Frame (Messzeitpunkt) N komplexwertige Zahlen $a_i$ mit i=1..N. Unter einem Bin wird im Folgenden ein Frequenz- oder Zeitabschnitt verstanden.

Eine vorgegebene Anzahl T an FFT-Frames wird für jedes Bin in einer N*N Kovarianzmatrix C aufsummiert, entsprechend

$$C_{ik} = \sum_{t=1}^{T}(a_i(t)a_k^{\star}(t)) \quad \text{mit i,k = 1..N} \qquad (4)$$

Im nächsten Schritt werden aus den Kovarianzmatrizen die jeweilige Signalanzahl und Peilwerte bestimmt.

Geeignete Verfahren zur Signalanzahlschätzung sind z.B. das MDL-Prinzip (Minimum Description Length -Prinzip) [3] für nicht kohärente Signale und MDLC (Minimum Description Length coherent-Prinzip) für kohärente Signale [4]. Die Peilwertberechnung kann z.B. für nicht kohärente Signale mittels hochauflösender Peilverfahren wie MUSIC [5] und für kohärente Signale z.B. mit einem Maximum-Likelyhood Schätzer wie [5] durchgeführt. Signalanzahl und Einfallsrichtungen können jedoch auch aus anderen Verfahren verfügbar sein wie z.B. aus Histogrammauswertungen mit einem 1-Wellenpeilverfahren wie z.B. konventionellem Beamforming oder über Vorkenntnis von Emitterstandorten.

Anschließend wird bestimmt, in welchem Frequenzintervall die jeweiligen Signale liegen und jedem Signal ein Peilwert zugeordnet. Bei automatisierter Ausführung kann dies z.B. mit einem Klassifikator bestimmt werden.

Als Ausgangspunkt für die im kennzeichnenden Teil des Anspruchs 1 angegebenen Verfahrensschritte sollen folgende Ergebnisse vorliegen:

- Ein in Frequenz- und/oder Zeitabschnitte zerlegter Messbereich (im Beispiel Zerlegung in Frequenz-Bins).
- Den in den Frequenz/Zeitabschnitten detektierten Signalen soll mindestens ein Klassifikationsmerkmal wie z.B. Peilwert, Pegel, Modulationsart, etc., zugeordnet sein (im Beispiel Peilwerte).
- Den in den Frequenz/Zeitabschnitten detektierten Signalen sollen abgespeicherte Meßdaten zugeordnet sein, aus denen sich Steering-Vektoren bestimmen lassen (im Beispiel Kovarianzmatrizen).

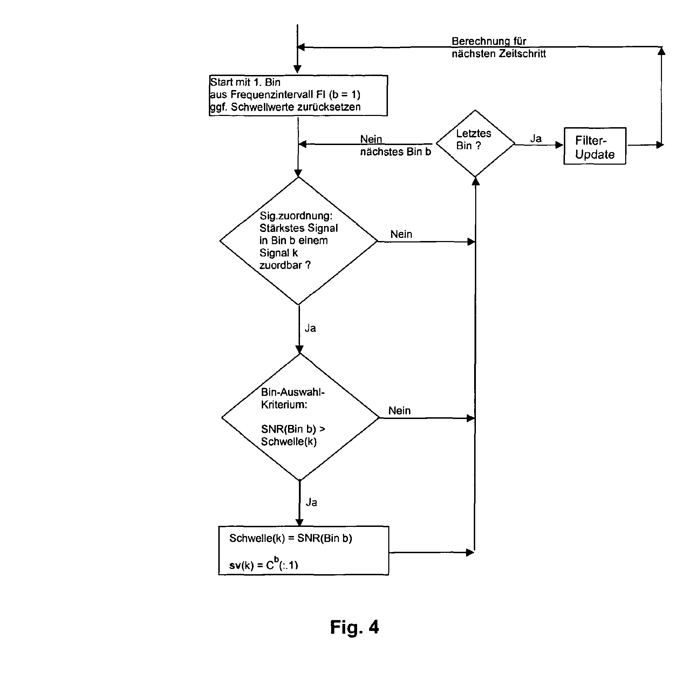

Die Bestimmung der Steering-Vektoren wird anschließend erfindungsgemäß entsprechend Fig. 3 (gestrichelter Kasten) und Fig. 4 wie folgt durchgeführt:

Bei beabsichtigter Verstärkung des (Nutz-) Signals 1 wird zweckmäßig aus der Gesamtheit der Frequenz-Bins des Peilers nur jenes Frequenzintervall FI ausgewählt, das die mit Signal 1 überlappenden Signale $S_1...S_M$ beinhaltet.

Die Ermittlung der geeigneten Bins zur Bestimmung der "Steering-Vektoren" geschieht in 2 Schritten:

- Zuordnung des in einem Bin enthaltenen stärksten Signals zu einem Signal $S_k$ aus $S_1...S_M$ anhand eines Klassifikationsmerkmals oder durch Korrelation von Steering-Vektoren.
- Auswahl des am besten geeigneten Bins $B_{sk}$ aller einem Signal $S_k$ zugeordneten Bins.

Zur Signal-Zuordnung:

Die Zuordnung erfolgt im Beispiel entsprechend dem Klassifikationsmerkmal Peilwert bzw. bei mehreren Peilwerten pro Bin entsprechend des Peilwerts des Signals mit dem höchsten Pegel (Pegelberechnung z.B. nach [5]) zum im Raumwinkel am nächsten gelegenen Signal aus $S_1...S_M$. Liegt der Winkelabstand zu allen Signalen oberhalb eines Schwellwerts, wird das Bin verworfen.

Weil zur vorgeschalteten Peilwertberechnung in der Regel bereits Annahmen über die Antennencharakteristiken getroffen wurden, d.h. für jedes Signal $S_k$ aus $S_1...S_M$ bereits ein angenommener Steering-Vektor $\mathbf{a}_k^0$ existiert, kann anstelle der Zuordnung über ein Klassifikationsmerkmal auch eine Zuordnung durch Korrelation von Steering-Vektoren durchgeführt werden. Z.B. wird ein in einem Bin ermittelter Steering-Vektor $\mathbf{sv}$ dem Signal $S_k$ zugeordnet, falls:

$$|a_k^0\ \mathbf{conj(sv)}|^2 > |a_r^0\ \mathbf{conj(sv)}|^2 \qquad \text{mit } r=1..M \text{ und } r \text{ ungleich } k$$

(conj: konjugiert komplex, Skalarprodukt)

und $\hspace{10cm}$ (5)

$$|a_k^0\ \mathbf{conj(sv)}|^2 > \text{vorgegebener Schwellwert}$$

Zur Bin-Auswahl

Die Auswahl des am besten geeigneten Frequenz-Bins $B_{Sk}$ aus allen dem Signal $S_k$ zugeordneten Bins erfolgt über ein Kriterium zur Bestimmung eines möglichst reinen 1 Wellenfalls mit möglichst wenig Interferenz und Rauschen.

Eine spezielle Ausführung dieser Bedingung unter Verwendung der Eigenwerte der Sensorkorrelationsmatrix R ist in Gleichung (6a, 6b) beschrieben:

Anstelle der Eigenwerte der üblicherweise nicht bekannten Sensor-Korrelationsmatrix R in Gleichung (2) können als Näherung die Eigenwerte der über T Meßzeitpunkte aufsummierten Kovarianzmatrix C in Gleichung (4) verwendet werden. Für ein Signal $S_k$ wird jenes Bin aus den diesem Signal zugeordneten Bins bestimmt, bei dem das in Gleichung (6a) dargestellte Verhältnis maximal ist. Dieses Verhältnis entspricht im 1-Wellenfall dem SNR (Signal zu Rausch-Verhältnis). Gleichung (6b) ist dabei eine Näherung für Gleichung (6a).

$$SNR = \frac{Ew(1)}{\sum_{i=2}^{H} Ew(2)} \quad \text{mit } H=\min(T,N) \qquad (6a)$$

Für T<N besitzt die Matrix C nur T von Null verschiedene Eigenwerte. Deshalb erstreckt sich die Summation im Nenner nur bis H.

$$SNR = \frac{Ew(1)}{Ew(2)(H-1)} \qquad (6b)$$

Den Steering-Vektor zum Signal $S_k$ erhält man aus einer Spalte der Kovarianzmatrix C(1..N,1) des jeweils zugeordneten Bins $B_{Sk}$. Dabei sind in der i-ten Spalte der Kovarianzmatrix die Steering-Vektor Phasen auf den i-ten Sensor bezogen.

Alternativ verwendet man als Steering-Vektor den Eigenvektor zum größten Eigenwert der Kovarianzmatrix, welcher eine über die gesamte Kovarianzmatrix gemittelte Lösung darstellt [5].

Bei Signalen, für die keine derartige Schätzung des Steering-Vektors vorliegt, weil sie z.B. von stärkeren Signalen vollständig verdeckt sind, wird der bisher z.B. zur Peilung angenommene Steering-Vektor beibehalten. Liegt überhaupt keine Schätzung bzw. Annahme über einen Steering-Vektor vor, so wird das zugehörige Signal in der Filterberechung nicht berücksichtigt, d.h. weder verstärkt noch unterdrückt.

Mit den neu ermittelten Steering-Vektoren wird das Filter berechnet bzw. aktualisiert.

Die Steering-Vektoren können neben der beschriebenen Auswahl geeigneter Bins im Frequenzbereich auch über einen Zeitbereich ermittelt werden. Dies ist sinnvoll bei zeitlich nicht veränderlichen Einfallsrichtungen, wenn z.B. ein zunächst verdecktes Signal zu einem späteren Zeitpunkt mit höherem Pegel als die übrigen Signale einfällt. In diesem Fall nutzt man sowohl frequenzmäßige als auch zeitliche Schwankungen im Pegelverhältnis der Signale aus.

Die im Algorithmus verwendeten Schwellwerte sind entsprechend der Stabilität der Signalsituation anzupassen.

Beim Spezialfall vollständiger Überlappung, wenn z.B. ein schwächeres Signal von einem starken Signal im Spektrum völlig verdeckt ist, kann mit der genaueren Bestimmung des Steering-Vektors des starken Signals dieses bei der Filterung verbessert verstärkt oder abgeschwächt werden.

Bei Spezialfall der Verwendung eines Schmalbandpeilers mit fest eingestellter Mittenfrequenz erfolgt die Bestimmung der Steering-Vektoren einzelner Signale durch Anwendungen auf zeitlich nacheinanderfolgende Kovarianzmatrizen. Bei einem Betrieb mit Frequenz-Wechsel bzw. im Frequenz-Scanbetrieb können die Frequenzintervalle auch analog der Frequenz-Bins des Breitbandpeilers verwenden werden.

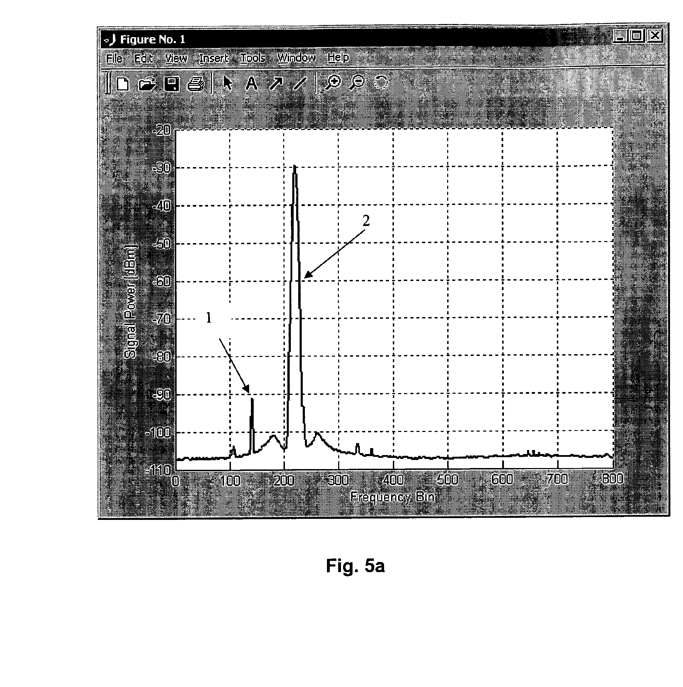

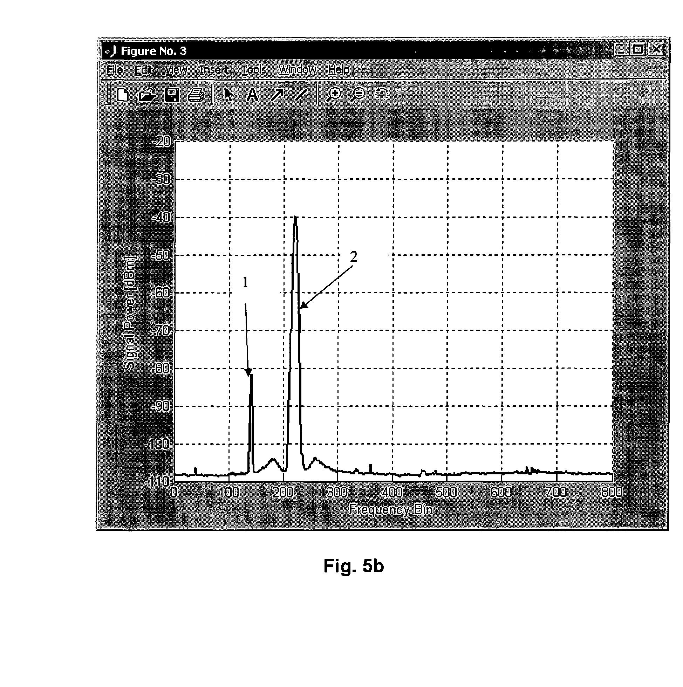

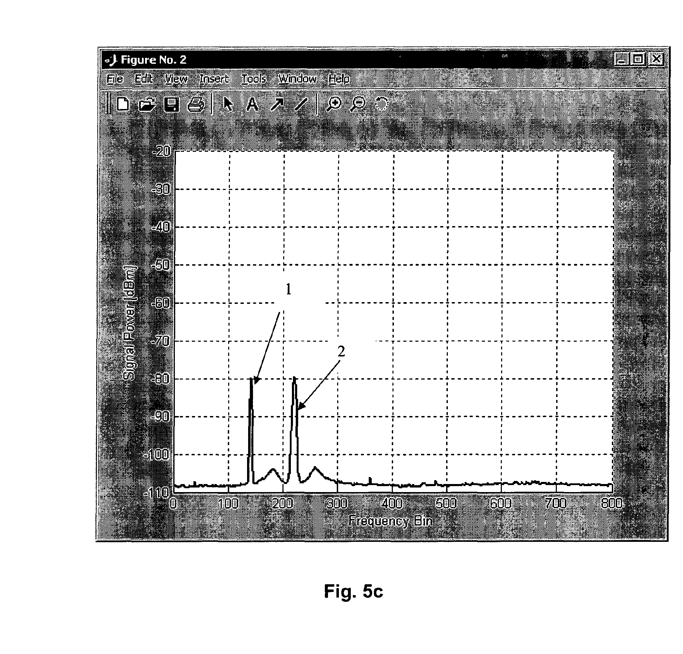

In Fig. 5 ist anhand eines Messbeispiels der Vergleich zwischen der Signalunterdrückung mittels dem bekannten Signal-Copy Verfahren und der Erfindung dargestellt. In der oberen Darstellung in Fig. 5 ist die Empfangsleistung eines Einzeldipols einer 9-elementigen Peilantenne bei einem Einfall von 2 Fremdsignalen über der Bin-Nummer aufgetragen. Signal 1 mit ca. -90 dBm befindet sich um Bin 141, Signal 2 mit ca. -30 dBm um Bin 220.

Die mittlere Darstellung zeigt die Empfangsleistungen nach Anwendung von Signal-Copy gemäß Gleichung (1) zur Verstärkung von Signal 1 und Unterdrückung von Signal 2 auf die Signale aller Elemente der Peilantenne. Dabei wurden für die Einzeldipole idealisierte, kreisförmige Antennencharakteristiken angenommen und Phasendifferenzen entsprechend der geometrischen Weglängen der Wellenausbreitung. Mit diesen idealisierten Steering-Vektoren wurden die Peilwerte der beiden Signale ermittelt und anschließend auch das Filter berechnet. Das (Nutz-) Signal 1 wird um ca. 10 dB verstärkt, das (Stör-) Signal 2 um ca. 10 dB abgesenkt.

Die untere Darstellung zeigt die Filterung mit Signal-Copy und dem erfindungsgemäßen Verfahren zur Ermittlung der Sensorcharakteristiken. Der Steering-Vektor von Signal 1 ist der Kovarianzmatrix zu Bin 141 und von Signal 2 der Kovarianzmatrix zu Bin 220 entnommen. Das Störsignal wird um ca. 50 dB abgesenkt. Das Signal-to-Interference Ratio SIR verbessert sich im Beispiel mit dem neuen Verfahren gegenüber dem Einzeldipolempfang um ca. 60 dBm und gegenüber dem herkömmlichen Signal-Copy Verfahren um ca. 40 dBm.

Literatur

[1] Miller, M.I., Fuhrmann, D.R: "Maximum-Likelyhood Narrow-Band Direction Finding and the EM Algorithm", IEEE Transactions on ASSP, Vol.38, No.9, Sept. 1990

[2] Godara, L.C.: "Smart Antennas", CRC Press, Boca Raton, 2004

[3] Wax M., Kailath, T.: "Detection of Signals by Information Theoretic Criteria", IEEE ASSP, Vol.33, No.2, pp.387-392, April 1985

[4] Wax M., Ziskind I.: "Detection the Number of Coherent Signals by the MDL Principle", IEEE Trans. ASSP, Vol.37, pp. 1190-1196, Aug. 1989

[5] R.O.Schmidt: "Multiple Emitter Location and Signal Parameter Estimation", IEEE Transactions on Antennas and Propagation, Vol AP-34, No.3, March 1986

**Patentansprüche**

1. Verfahren zur Bestimmung der Sensorcharakteristiken der Elemente eines Antennenarrays, dessen N Empfangskanäle mit einem N-kanaligen Breitbandempfänger verbunden sind, bei Einfall von M Signalen $S_1...S_M$ mittels Berechnung von Steering-Vektoren für ein Signal $S_k$ mit $k \in \{1...M\}$ umfassend folgende Verfahrensschritte:

   Zerlegung der Empfangssignale in B vorgebbare Zeit- oder Frequenzabschnitte, Zuordnung von abgespeicherten Messdaten, welche geeignet sind zur Berechnung von Steering-Vektoren, zu den in die B Zeit- oder Frequenzabschnitte zerlegten Empfangssignalen, wobei für jeden der B Zeit- oder Frequenzabschnitte Kovarianzmatrizen C aus einer zeitlichen Abfolge von T Mess-Frames der jeweils N Mess-Signale des Breitbandempfängers gebildet werden,
   Zuordnung eines Klassifikationsmerkmals zu den in die B Zeit- oder Frequenzabschnitte zerlegten Empfangssignalen $S_1...S_M$,
   **dadurch gekennzeichnet, dass**
   zur Berechnung eines verbesserten Steering-Vektors für ein Signal $S_k$ in einem ersten Schritt ein Frequenzintervall FI ausgewählt wird, in welchem das Signal $S_k$ das stärkste Signal ist und wobei die Zuordnung zu $S_k$ anhand vorgebbarer Klassifikationsmerkmale oder der Korrelation von mittels gespeicherten Messdaten ermittelter Steering-Vektoren erfolgt,

und in einem zweiten Schritt aus dem einem Signal $S_k$ zugeordneten Frequenzintervall FI derjenige Zeit- oder Frequenzabschnitt $B_{SK}$ ausgewählt wird, welcher die geringste Abweichung zu einem 1-Wellenfall aufweist, wobei der Steering-Vektor für das Signal $S_k$ gleich einer Spalte der Kovarianzmatrix C des Zeit-oder Frequenzabschnitt $B_{SK}$ gesetzt wird oder alternativ gleich dem Eigenvektor zum größten Eigenwert der Kovarianzmatrix.

2. Verfahren nach Anspruch 1,
   **dadurch gekennzeichnet, dass**
   die Elemente der Kovarianzmatrix berechnet werden gemäß

$$C_{ik} = \sum_{.}^{T} \left( a_i(t) a_k^{\star}(t) \right) \text{ mit i,k=1..N}$$

$a_i$ = Ausgangswert des i-ten Mess-Signals des Breitbandempfängers für einen Zeit oder Frequenzabschnitt
$a^{\star}_k$ = konjugiert komplexer Ausgangswert des k-ten Mess-Signals des Breitbandempfängers für einen Zeit oder Frequenzabschnitt.

3. Verfahren nach Anspruch 2,
   **dadurch gekennzeichnet, dass**
   aus den B Zeit- oder Frequenzabschnitten derjenige Zeit- oder Frequenzabschnitt $B_{SK}$ ausgewählt wird, welcher den maximalen Quotienten aus größtem und zweitgrößtem Eigenwert der Kovarianzmatrix C liefert.

4. Verfahren nach Anspruch 2,
   **dadurch gekennzeichnet, dass**
   aus den B Zeit- oder Frequenzabschnitten derjenige Zeit- oder Frequenzabschnitt $B_{SK}$ ausgewählt wird, welcher den maximalen Quotienten aus dem größten Eigenwert und der Summe der positiven Eigenwerte der Kovarianzmatrix C liefert.

5. Verfahren nach einem der vorangehenden Ansprüchen,
   **dadurch gekennzeichnet, dass**
   das Klassifikationsmerkmal die Einfallsrichtung des Signals $S_1,..,S_m$, ein Signalpegel oder eine Modulationsart ist.

6. Verfahren nach einem der vorangehenden Ansprüchen,
   **dadurch gekennzeichnet, dass**
   die Steering-Vektoren im Festfrequenz-Betrieb aus Messwerten unterschiedlicher Zeitabschnitte und bei Betrieb mit Frequenzwechsel bzw. im Frequenz-Scanbetrieb aus Messwerten in unterschiedlichen Frequenzabschnitten und/oder zu unterschiedlichen Zeitabschnitten gebildet werden.

**Claims**

1. Method for determining the sensor characteristics of the elements of an antenna array, whose N receiving channels are connected to an N-channel broadband receiver, upon incidence of M signals $S_1...S_M$ by means of calculating steering vectors for a signal $S_k$ with k $\in$ {1...M}, comprising the following method steps:

   decomposing the received signals into B prescribable time or frequency segments,
   assigning stored measured data, which are suitable for calculating steering vectors, to the received signals decomposed into the B time or frequency segments, covariance matrices C being formed for each of the B time or frequency segments from a time sequence of T measurement frames of the respective N measurement signals of the broadband receiver,
   assigning a classification feature to the received signals $S_1...S_M$ decomposed into the B time or frequency segments,
   **characterized in that**
   in order to calculate an improved steering vector for a signal $S_k$, there is selected in a first step a frequency interval FI in which the signal $S_k$ is the strongest signal, and the assignment to $S_k$ being performed with the aid of prescribable classification features, or the correlation of steering vectors determined by means of stored measured data,

and in a second step there is selected from the frequency interval FI assigned to a signal $S_k$ that time or frequency segment $B_{SK}$ which has the least deviation from a 1-wave case, the steering vector for the signal $S_k$ being equated to a column of the covariance matrix C of the time or frequency segment $B_{SK}$, or is alternatively equated to the eigenvector relating to the largest eigenvalue of the covariance matrix.

2. Method according to Claim 1, **characterized in that** the elements of the covariance matrix are calculated in accordance with

$$C_{ik} = \sum_{t}^{T} \left( a_i(t) a_k^*(t) \right) \text{ where i, k = 1...N}$$

$a_i$ = output value of the ith measurement signal of the broadband receiver for a time or frequency segment, and $a_k$ = complex conjugate output value of the kth measurement signal of the broadband receiver for a time or frequency segment.

3. Method according to Claim 2, **characterized in that** there is selected from the B time or frequency segments that time or frequency segment $B_{SK}$ which provides the maximum quotient of the largest and second largest eigenvalue of the covariance matrix C.

4. Method according to Claim 2, **characterized in that** there is selected from the B time or frequency segments that time or frequency segment $B_{SK}$ which provides the maximum quotient from the largest eigenvalue and the sum of the positive eigenvalues of the covariance matrix C.

5. Method according to one of the preceding claims, **characterized in that** the classification feature is the incidence direction of the signal $S_1,...,S_M$, a signal level or a type of modulation.

6. Method according to one of the preceding claims, **characterized in that** in fixed frequency operation the steering vectors are formed from measured values of different time segments, and in operation with frequency change or in frequency scanning operation are formed from measured values in different frequency segments and/or relating to different time segments.

**Revendications**

1. Procédé de détermination des caractéristiques de détection des éléments d'un réseau d'antennes, dont les N canaux de réception sont reliés avec un récepteur à large bande à N canaux, lors de l'incidence de M signaux $S_1...S_M$ au moyen du calcul de vecteurs d'orientation pour un signal $S_k$ avec $k \in \{1...M\}$, comprenant les étapes de procédé suivantes :

décomposition des signaux reçus en B portions pouvant être prédéfinies de temps ou de fréquence,
association de données de mesure mises en mémoire, lesquelles conviennent pour le calcul de vecteurs d'orientation, aux signaux reçus décomposés en les B portions de temps ou de fréquence, des matrices de covariance C étant formées pour chacune des B portions de temps ou de fréquence à partir d'une séquence temporelle de T trames de mesure des N signaux de mesure respectifs du récepteur à large bande,
association d'une caractéristique de classification aux signaux reçus $S_1...S_M$ décomposés en les B portions de temps ou de fréquence,
**caractérisé en ce que**
pour calculer un vecteur d'orientation amélioré pour un signal $S_k$, dans une première étape, est sélectionné un intervalle de fréquence FI dans lequel le signal $S_k$ est le signal le plus puissant et l'association à $S_k$ s'effectue au moyen de caractéristiques de classification pouvant être prédéfinies ou de la corrélation de vecteurs d'orientation déterminés à l'aide de données de mesure mises en mémoire, et, dans une deuxième étape, est sélectionnée à partir de l'intervalle de fréquence FI associé à un signal $S_k$ la portion de temps ou de fréquence $B_{SK}$ qui présente le plus petit écart par rapport à un cas avec une seule onde, le vecteur d'orientation pour le signal $S_k$ étant défini de manière à être égal à une colonne de la matrice de covariance C de la portion de temps ou de fréquence $B_{SK}$ ou, en variante, égal au vecteur propre associé à la valeur propre la plus grande de la matrice de covariance.

2. Procédé selon la revendication 1, **caractérisé en ce que** les éléments de la matrice de covariance sont calculés conformément à

$$C_{ik} = \sum\nolimits^{T} \; (a_i(t)a*_k(t)), \; \text{avec} \; i, \; k = 1..N$$

$a_i$ = valeur initiale du i-ème signal de mesure du récepteur à large bande pour une portion de temps ou de fréquence
$a*_k$ = valeur initiale complexe conjuguée du k-ème signal de mesure du récepteur à large bande pour une portion de temps ou de fréquence.

3. Procédé selon la revendication 2, **caractérisé en ce que** parmi les B portions de temps ou de fréquence est sélectionnée la portion de temps ou de fréquence $B_{SK}$ qui fournit le quotient maximal de la plus grande et de la deuxième plus grande valeur propre de la matrice de covariance C.

4. Procédé selon la revendication 2, **caractérisé en ce que** parmi les B portions de temps ou de fréquence est sélectionnée la portion de temps ou de fréquence $B_{SK}$ qui fournit le quotient maximal de la plus grande valeur propre et de la somme des valeurs propres positives de la matrice de covariance C.

5. Procédé selon l'une des revendications précédentes, **caractérisé en ce que** la caractéristique de classification est le sens d'incidence du signal $S_1,..,S_M$, un niveau de signal ou un type de modulation.

6. Procédé selon l'une des revendications précédentes, **caractérisé en ce que** les vecteurs d'orientation en fonctionnement à fréquence fixe sont formés à partir de valeurs mesurées de différentes portions de temps et, en fonctionnement avec changement de fréquence ou en mode balayage de fréquence, sont formés à partir de valeurs mesurées dans différentes portions de fréquence et/ou à différentes portions de temps.

N Filterkoeffizienten

x1(t)

x2(t)

xN(t)

Output y(t)

**Fig. 1**

Verstärkung [dB]          Verstärkung Signale          Verstärkung Gaußsches Rauschen

Azimuth [°]

**Fig. 2**

N Empfangskanäle

Sensorarray

| | | | . . . . . . . . . . . . . . . . . . . . . | |

**N kanaliger, digitaler Breitbandempfänger
mit A/D Wandler, FFT**

B FFT-Bins  N  N  N  N  N  N  N  . . . . . . . . . . . . . . . . N

**Kovarianzmatrix für jedes Bin aufsummieren**

Kovarianz-
Matrizen  $N \cdot N$  $N \cdot N$  $N \cdot N$  $N \cdot N$  $N \cdot N$  $N \cdot N$  $N \cdot N$  . . . . . . . . . . . . . . . . . . . $N \cdot N$

**Signalanzahl und Peilwerte für Bins berechnen**

Peilwerte  M1  M2  M3  M4  M5  M6  M7  . . . . . . . . . . . . . . . . . . $M_B$

**Klassifikation**

Bestimmung des
Frequenzintervalls
entsprechend Lage
der interferierenden
Signale

Signal 1

Signal 2

Frequenz-Bins

Frequenzintervall FI

Bin-Auswahl zur Ermittlung
der Steering-Vektoren

Signal-Zuordnung über
Klassifikationsmerkmal oder
Korrelation von Steering-Vekt.

Auswahl-Kriterium

$sv_3 = Kov^{B3}(:,1)$    $sv_2 = Kov^{B2}(:,1)$    $sv_1 = Kov^{B1}(:,1)$

Ermittlung der Steering-Vektoren
aus den Kovarianzmatrizen der
ausgewählten Bins

**Normierung der Steering-Vektoren**

**Update der Filterberechnung**

**Fig. 3**

Berechnung für
nächsten Zeitschritt

Start mit 1. Bin
aus Frequenzintervall FI (b = 1)
ggf. Schwellwerte zurücksetzen

Nein
nächstes Bin b

Letztes
Bin ?

Ja

Filter-
Update

Sig.zuordnung:
Stärkstes Signal
in Bin b einem
Signal k
zuordbar ?

Nein

Ja

Bin-Auswahl-
Kriterium:

SNR(Bin b) >
Schwelle(k)

Nein

Ja

Schwelle(k) = SNR(Bin b)

$sv(k) = C^b(:.1)$

# Fig. 4

**Fig. 5a**

**Fig. 5b**

**Fig. 5c**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19803188 A1

**In der Beschreibung aufgeführte Nicht-Patentliteratur**

- **MILLER, M.I. ; FUHRMANN, D.R.** Maximum-Likelyhood Narrow-Band Direction Finding and the EM Algorithm. *IEEE Transactions on ASSP,* September 1990, vol. 38 (9
- **GODARA, L.C.** Smart Antennas. CRC Press, 2004
- **WAX M. ; KAILATH, T.** Detection of Signals by Information Theoretic Criteria. *IEEE ASSP,* April 1985, vol. 33 (2), 387-392
- **WAX M. ; ZISKIND I.** Detection the Number of Coherent Signals by the MDL Principle. *IEEE Trans. ASSP,* August 1989, vol. 37, 1190-1196
- **R.O.SCHMIDT.** Multiple Emitter Location and Signal Parameter Estimation. *IEEE Transactions on Antennas and Propagation,* Marz 1986, vol. AP-34 (3